# EUROPÄISCHE PATENTANMELDUNG

(11) **EP 4 667 740 A1**
(43) Veröffentlichungstag der Anmeldung: **24.12.2025**
(21) Anmeldenummer: 25183498.2
(22) Anmeldetag: 17.06.2025
(51) Int. Cl.: F03D 1/06

(54) **SEGMENTIERTES ROTORBLATT FÜR WINDKRAFTANLAGEN**

(30) Priorität: 17.06.2024 DE 102024116982
(71) Anmelder: Deutsches Zentrum für Luft- und Raumfahrt e.V., 53227 Bonn-Oberkassel (DE)
(72) Erfinder: Beyland, Lutz, 38110 Braunschweig (DE)
(74) Vertreter: Gramm, Lins & Partner Patent- und Rechtsanwälte PartGmbB

(57) **Zusammenfassung**

Die Erfindung betrifft ein segmentiertes Rotorblatt für Windkraftanlagen mit mindestens zwei Blattsegmenten, wobei jedes Blattsegment mindestens ein innenliegendes Holmelement aufweist, wobei das erste Holmelement und das zweite Holmelement an der Fügestelle mit ihren Stirnseiten mittels einer Verbindungsanordnung aneinandergefügt sind, wobei die Verbindungsanordnung eine Mehrzahl von Verbindungsgarnituren aufweist, die jeweils die Holmelemente miteinander verbinden, wobei jede Verbindungsgarnitur einen ersten Querbolzen, einen zweiten Querbolzen und wenigstens eine Verbindungslasche umfasst, die an ihren Enden eine erste Laschenöffnung und eine zweite Laschenöffnung aufweist, und wobei bei jeder Verbindungsgarnitur der erste Querbolzen quer zur Längsrichtung des Rotorblattes durch eine Holmöffnung im ersten Holmelement sowie die erste Laschenöffnung der Verbindungslasche und der zweite Querbolzen quer zur Längsrichtung des Rotorblattes durch eine Holmöffnung im zweiten Holmelement sowie die zweite Laschenöffnung der Verbindungslasche geführt ist, sodass die Verbindungslasche die Holmelemente miteinander verbindet. Erfindungsgemäß ist vorgesehen, dass zumindest einer der Querbolzen einer Verbindungsgarnitur als axiales Vorspannelement ausgebildet ist, welches im eingesetzten Zustand eine rotorblattbezogene axiale Vorspannung auf die wenigstens eine Verbindungslasche der Verbindungsgarnitur derart ausübt, dass die Stirnseiten der Holmelemente aneinander gepresst werden.

## Beschreibung

Die Erfindung betrifft ein segmentiertes Rotorblatt für Windkraftanlagen mit mindestens zwei Blattsegmenten, die sich in entgegengesetzter Richtung von einer Fügestelle aus in eine Längsrichtung erstrecken, wobei jedes Blattsegment mindestens ein innenliegendes Holmelement aufweist, welches ein Strukturelement des Rotorblattes bildet. Die Erfindung betrifft ebenso eine Windkraftanlage hierzu.

Mit dem zunehmenden Ausbau erneuerbarer Energien rückt zunehmend auch die Frage der Effizienz solcher auf erneuerbare Energien basierender Energieanlagen in den Fokus. Gerade im Bereich der Windkraftanlagen, auch Windenergieanlagen genannt, hat es sich gezeigt, dass mit zunehmender Größe der Rotorblätter auch deutlich mehr Energie gewonnen werden kann, was den Einsatz derartiger Windkraftanlagen rentabler macht.

Mit zunehmender Länge der Rotorblätter entsteht allerdings das Problem, dass der Transport zum Errichtungsstandort immer häufiger zu hohen Kosten führt und teilweise gar nicht möglich ist. Denn ab einer gewissen Länge der Rotorblätter können diese nicht mehr ohne weiteres auf den öffentlichen Infrastrukturwegen transportiert werden. Eine Lösung dieses Transportproblems sind segmentierte Rotorblätter, bei denen das Rotorblatt in seiner Länge in zwei oder mehr Segmente unterteilt wird. Diese Segmente werden dann separat transportiert und erst am Errichtungsstandort zusammengefügt.

Segmentierte Rotorblätter benötigen eine Verbindungstechnik an ihrer Fügestelle. Dafür werden häufig Insert-Verschraubungen eingesetzt, um die einzelnen Rotorblattsegmente kraft- und formschlüssig miteinander zu verbinden. Dabei werden meist metallische Inserts mit Innengewinde in die lasttragenden Gurte eingebettet und über ein Zwischensegment in Blattlängsrichtung verschraubt.

Aus der WO 2010/ 023 299 A2 ist ein segmentiertes Rotorblatt bekannt, das an seinen Holmen zusammengesetzt ist. Hierfür ragt bei einem Segment der Holmabschnitt über die Fügestelle hinaus in das zweite Segment hinein, wobei mit Hilfe einer Schraubverbindung die Holme gegeneinander fixiert werden. Hierbei ist unter anderem vorgesehen, dass mit der Holmverschraubung die Holme kraftschlüssig aneinandergedrückt werden, um so eine möglichst hohe Stabilität und Steifigkeit zu erreichen.

Nachteilig hierbei ist insbesondere die Tatsache, dass die für die Verschraubung notwendigen Bauteile sehr genau gefertigt werden müssen, da es ansonsten zu Spannungen innerhalb der Bauteile führen kann, die zum Versagen der Schraubverbindung beitragen können. Gerade im Bereich von Rotorblättern aus faserverstärkten Kunststoffen ist jedoch ein solches Toleranzmaß nicht immer gegeben.

Aus der EP 2 288 807 B1 ist des Weiteren ein segmentiertes Rotorblatt bekannt, bei dem sich bei einem der Segmente ebenfalls der Holmabschnitt über die Fügestelle hinaus bis in das andere Segment erstreckt. Die beiden Segmente werden dabei mittels der Holme an den Stirnseiten der Holme verschraubt, um so eine kraftschlüssige Verbindung an der Fügestelle zu erreichen.

Aus der DE 31 09 566 C2 sind ein Rotorblatt für Windenergiemaschinen und Spannvorrichtungen zur Montage offenbart, wobei zwei Rotorblatt-Segmente mittels einer Dehnschraube zusammengehalten werden.

Aus der DE 10 2008 055 513 A1 ist ein Rotorblatt für Windkraftanlagen bekannt, das ebenfalls aus mehreren Segmenten besteht, wobei die einzelnen Segmente mithilfe einer Verklebung zusammengefügt werden.

Aus der WO 2009/ 090 537 A2 und sowie der WO 2011/ 067 323 A2 ist jeweils ein segmentiertes Rotorblatt bekannt, bei denen sich ein Verbindungselement in das jeweils andere Blattsegment hinein erstreckt und dort mittels Verschraubung befestigt wird.

Aus der WO 2016/ 087 594 A1 ist ein segmentiertes Rotorblatt für Windkraftanlagen bekannt, wobei die Blattsegmente jeweils mindestens ein Holmelement umfassen, die zum Verbinden ineinander geschoben werden. Ein durch beide Holmelemente geführter Querbolzen sichert dabei die Verbindung, wobei der Querbolzen in einer Gleitbuchse, die in den jeweiligen Öffnungen der Holmelemente enthalten ist, gelagert wird.

Ein großes Problem bei der Verbindung von segmentierten Rotorblättern mittels einer Schraubverbindung bei ineinander geschobenen Holmen besteht in der Tatsache, dass die an der Schraubverbindung beteiligten Buchsen der beiden Holmabschnitte hochgenau positioniert werden müssen, damit diese exakt axial fluchten. Erst hierdurch wird eine spielfreie Verbindung der beiden Rotorblattsegmente möglich, die den Beanspruchungen einer Windkraftanlage im Dauerbetrieb standhält. In der Praxis werden hierfür die in den Holmen benötigten Öffnungen im zusammengesteckten Zustand in einem Arbeitsschritt hergestellt, was bedingt, dass die einzelnen Segmente bei der Herstellung des Rotorblattes zumindest einmal zusammengebaut werden müssen, um die Buchsen-Bohrungen herstellen zu können. Dies hat allerdings mehrere Nachteile. Zum einen wird viel Platz in der Produktionshalle benötigt, was sich negativ auf die Investitionskosten auswirkt. Darüber hinaus ist ein weiterer Verarbeitungsschritt notwendig, der Zeit in Anspruch nimmt, was zu Lasten der Produktivität geht. Schließlich hat die aus der Praxis bekannte Technik den Nachteil, dass immer nur die beiden gemeinsam gebohrten Blattsegmente zueinander passen, was bedingt, dass die einzelnen Segmente nicht in Serie gefertigt werden können, sondern immer nur paarweise. Ein variabler Austausch der Segmente untereinander ist somit nicht mehr möglich.

Darüber hinaus ist die Tragfähigkeit der Insert-Verschraubung zu gering für moderne, schlanke und sehr lange Rotorblätter. Einerseits begrenzt die Ausreißkraft des Inserts aus dem Laminat die Tragfähigkeit, andererseits ist die Festigkeit des verbindenden Längsbolzens begrenzt. Eine Blattsegmentierung kann so nur gelingen, wenn die Segmentierungsposition weit in Richtung Blattspitze verschoben wird (auf ca. 80% der Blattlänge). Eine Teilung in Blattmitte ist aus Transportsicht aber deutlich vorteilhafter, da die maximale Komponentenlänge minimiert ist. Außerdem ist oft eine Profilvergrößerung an der Segmentierungsposition notwendig, um mehr Platz für die Verbindungselemente zu generieren und das Widerstandsmoment gegen Biegung zu erhöhen. Eine Profilvergrößerung führt zu aerodynamischen Verlusten, so dass die Wirtschaftlichkeit der gesamten Windenergieanlage beeinträchtigt wird.

Es ist daher Aufgabe der vorliegenden Erfindung ein verbessertes Rotorblatt anzugeben, welches hinsichtlich des Transports sinnvoll segmentiert werden kann und dabei gleichzeitig eine hohe Verbindungsqualität aufweist.

Die Aufgabe wird mit dem segmentierten Rotorblatt gemäß Anspruch 1 erfindungsgemäß gelöst. Vorteilhafte Ausgestaltungen der Erfindung finden sich dann in den entsprechenden Unteransprüchen.

Gemäß Anspruch 1 wird ein segmentiertes Rotorblatt für Windkraftanlagen mit mindestens zwei Blattsegmenten vorgeschlagen, die sich in entgegengesetzter Richtung von einer Fügestelle aus in eine Längsrichtung erstrecken, wobei jedes Blattsegment mindestens ein innenliegendes Holmelement aufweist, welches ein Strukturelement des Rotorblattes bildet, wobei das segmentierte Rotorblatt gattungsgemäß aufweist:
- das erste Holmelement des ersten Blattsegmentes und das zweite Holmelement des zweiten Blattsegmentes sind an der Fügestelle mit ihren Stirnseiten mittels einer Verbindungsanordnung aneinandergefügt,
- die Verbindungsanordnung weist eine Mehrzahl von Verbindungsgarnituren auf, die jeweils die Holmelemente miteinander verbinden,
- jede Verbindungsgarnitur hat einen ersten Querbolzen, einen zweiten Querbolzen und wenigstens eine Verbindungslasche, die an ihren Enden eine erste Laschenöffnung und eine zweite Laschenöffnung aufweist, und
- wobei bei jeder Verbindungsgarnitur der erste Querbolzen quer zur Längsrichtung des Rotorblattes durch eine Holmöffnung im ersten Holmelement sowie die erste Laschenöffnung der Verbindungslasche und der zweite Querbolzen quer zur Längsrichtung des Rotorblattes durch eine Holmöffnung im zweiten Holmelement sowie die zweite Laschenöffnung der Verbindungslasche geführt ist, sodass die Verbindungslasche die Holmelemente miteinander verbindet.

Erfindungsgemäß ist nun vorgesehen, dass zumindest einer der Querbolzen einer Verbindungsgarnitur als axiales Vorspannelement ausgebildet ist, welches im eingesetzten Zustand eine rotorblattbezogene axiale Vorspannung auf die wenigstens eine Verbindungslasche der Verbindungsgarnitur derart ausübt, dass die Stirnseiten der Holmelemente aneinander gepresst werden.

Demnach werden die beiden Holmelemente der Blattsegmente an ihren Stirnseiten aneinandergefügt und dann mithilfe einer Mehrzahl von Verbindungsgarnituren zusammengefügt, wobei vorzugsweise bei jeder Verbindungsgarnitur, zumindest aber bei einem Teil der Verbindungsgarnituren eine axiale Vorspannung mit Hilfe des jeweiligen axialen Vorspannelementes erzeugt wird. Die Holmelemente werden insbesondere nicht ineinandergeschoben, um so eine Verbindung der Blattsegmente herzustellen. Stattdessen werden die Stirnseiten der beiden Holmelemente durch das axiale Vorspannelement bzw. durch die axialen Vorspannelemente verschiedener Verbindungsgarnituren aneinandergepresst.

Eine solche axiale Vorspannung kann beispielsweise durch eine Exzenterbuchse oder einen exzentrischen Querbolzen realisiert werden, die durch Drehung im eingesetzten Zustand entweder den Abstand zwischen den beiden Holmöffnung und/oder den Abstand zwischen den beiden Laschenöffnungen verändert, insbesondere vergrößert, wodurch die Stirnseiten der Holmelemente aneinandergepresst werden.

Durch die axiale Vorspannung werden die Stirnseiten der Holmelemente aneinandergepresst, sodass zwischen ihnen kein Spiel mehr existiert und entsprechende Kräfte von dem Holmelement des ersten Blattsegmentes über die Stirnseiten das Holmelement des zweiten Blattsegmentes (und umgekehrt) übertragen werden können. Somit kann auch ohne einen Längsbolzen eine Vorspannung zwischen den Holmelementen in Blattlängsrichtung erzeugt werden, was insbesondere für die Fatigue-Beanspruchung vorteilhaft ist.

Jedes Holmelement weist für die entsprechende Verbindungsgarnitur eine Holmöffnung auf, durch die ein Querbolzen geführt wird. Der Querbolzen dient dabei dazu, die Verbindungslasche mit dem jeweiligen Holmelement zu verbinden. Hierfür wird der Querbolzen durch eine der Laschenöffnungen der Verbindungslasche geführt, sodass der Querbolzen sowohl durch die Verbindungslasche als auch durch die Holmöffnung des Holmelementes geführt wird. Ein zweiter Querbolzen wird dann durch die Holmöffnung des anderen Holmelementes sowie durch die gegenüberliegende Laschenöffnung der Verbindungslasche geführt, sodass die Holmelemente mithilfe der beiden Querbolzen und der verbindenden Verbindungslasche miteinander verbunden werden.

Da mehrere Verbindungsgarnituren existieren, können so die Holmelemente fest miteinander verbunden werden. Im Gegensatz zum Stand der Technik wird hierbei auf eine Längsverschraubung verzichtet, sondern stattdessen eine Verbindung über Querbolzen realisiert, da diese grundsätzlich eine höhere Verbindungsfestigkeit aufweisen.

Das Rotorblatt kann dabei aus einem Faserverbundwerkstoff aufweisend ein Fasermaterial und ein das Fasermaterial einbettendes Matrixmaterial hergestellt sein. Insbesondere die Holmelemente des Rotorblattes können aus einem solchen Faserverbundwerkstoff hergestellt sein. Als Fasermaterial eignen sich hierbei beispielsweise GFK oder ein CFK. Denkbar ist allerdings auch, dass ein Faser-Metall-Laminat (FML) Werkstoff eingesetzt wird, bei dem sich Lagen von Fasermaterial und Lagen von Metallmaterial abwechseln und so eine besonders hohe Verbindungsfestigkeit erreichen. Der Einsatz von Faser-Metall-Laminaten ist dabei besonders bevorzugt im Bereich der Holmöffnungen vorteilhaft, um eine besonders hohe Lochleibungsfestigkeit zu erzielen und eine feste Verbindung zu realisieren.

Das Material der Verbindungslaschen kann dabei beispielsweise ein Metallmaterial (Stahl, z.B. 1.7225) sein. Metallische Verbindungslaschen können kostengünstig aus Blechen (Dicke vorzugsweise 10 bis 100 mm) hergestellt werden, beispielsweise durch Plasmaschneiden, Wasserstrahlschneiden, Laserschneiden, Drahterodieren oder Stanzen. Alternativ können die Verbindungslaschen auch in variablen, lastgerechten Dicken geschmiedet werden.

Alternativ zu den metallischen Werkstoffen können die Verbindungslaschen auch aus einem FML (Faser-Metall-Laminat) gefertigt werden, bspw. ähnlich dem FML, welches im Verbindungsbereich eingesetzt wird. Dadurch kann das Gewicht der Verbindungstechnik reduziert werden. Alternativ werden die Verbindungslaschen aus eine reinen Faserkunststoffverbund hergestellt, um weiter Gewicht zu sparen. Mittels faserverstärktem 3-D-Druck oder Fiber Placement können dabei die Fasern optimal in Lastrichtung ausgerichtet werden, und zwar insbesondere in radialer an tangentialer Richtung an den Laschenöffnungen.

Dabei können pro Verbindungsgarnitur mindestens zwei Verbindungslaschen vorgesehen sein, um die Festigkeit der Verbindungsgarnitur zu erhöhen. Die erste Verbindungslasche wird dabei an einer ersten Seitenfläche der Holmöffnung an einem ersten Ende der Querbolzen angeordnet, während die zweite Verbindungslasche an einer der ersten Seitenfläche gegenüberliegenden zweiten Seitenfläche der Holmöffnung an einem zweiten Ende des Querbolzens angeordnet wird. Zwischen den beiden Verbindungslaschen befinden sich dabei die Abschnitte der zu verbindenden Holmelemente.

Gemäß einer Ausführungsform ist vorgesehen, dass zumindest der erste Querbolzen einer ersten Verbindungsgarnitur und der zweiten Querbolzen einer der ersten Verbindungsgarnitur gegenüberliegenden zweiten Verbindungsgarnitur über zumindest ein erstes Schubverbindungselement miteinander verbunden sind.

Hierdurch wird es möglich, dass auch Schubkräfte über die Verbindungsstelle übertragen werden können. Die Anbindung der Schubverbindungselemente, beispielsweise ausgebildet in Form einer Schubstange, an die Querbolzen ist dabei besonders günstig, da die Querbolzen aufgrund ihrer massiven Bauweise eine hohe Anbindungsfestigkeit ermöglichen und so keine weiteren Anbindungsstellen an den Blattsegmenten ausgebildet werden müssen. So können Masse und Komplexität reduziert werden.

Das Schubverbindungselement verbindet dabei einen ersten Querbolzen, der in einer Holmöffnung des ersten Holmelementes angeordnet ist, mit einem zweiten Querbolzen, der in einer Holmöffnung des zweiten Holmelementes angeordnet ist. Somit können auch die Schubkräfte sicher über die Verbindungsanordnung übertragen und abgetragen werden und damit die Verbindungsanordnung deutlich stabiler gestaltet werden.

Dabei liegen die Verbindungsgarnituren, deren erste und zweite Querbolzen über das Schubverbindungselement miteinander verbunden werden, in der Verbindungsanordnung gegenüberliegend vor, sodass das Schubverbindungselement von einer ersten Seite der Holmelemente auf eine gegenüberliegende zweite Seite der Holmelemente verläuft, beispielsweise von einer Vorderseite zu einer Rückseite des Rotorblattes.

Gemäß einer Ausführungsform hierzu ist vorgesehen, dass der zweite Querbolzen der ersten Verbindungsgarnitur und der erste Querbolzen der zweiten Verbindungsgarnitur über ein zweites Schubverbindungselement miteinander verbunden sind.

Hierdurch wird eine Art über Kreuz Schubverbindung realisiert, um so eine optimale Abtragung der Schubkräfte zu erreichen.

Gemäß einer Ausführungsform ist vorgesehen, dass das erste Holmelement und das zweite Holmelement jeweils ein erstes Gurtelement und ein gegenüberliegendes zweites Gurtelement haben, die beide durch wenigstens ein dazwischenliegendes Stegelement miteinander verbunden sind, wobei die Querbolzen in Holmöffnungen der Gurtelemente quer zur Längsrichtung des Rotorblattes eingebracht sind.

Bei den Gurtelementen handelt es sich um längliche, flächige und/oder bandförmige Elemente, die zusammen mit dem dazwischenliegenden Stegelement das Holmelement bilden. Im Querschnitt weist ein solches Holmelement mit Gurtelementen und Stegelement eine profilierte Form auf, beispielsweise in Form eines U-Profils oder eines Doppel-T-Profils. Denkbar ist aber auch, dass die Holmelemente eine geschlossene Querschnittsform aufweisen und so beispielsweise eine Röhrenform bilden. Die beiden Gurtelemente werden dabei an ihren beiden länglichen Seiten über die Stegelemente verbunden.

Bevorzugt ist dabei vorgesehen, dass im Bereich der Verbindungsanordnung das mindestens eine Stegelement eine Aussparung aufweist, um nicht nur Gewicht bei den Holmenelementen einzusparen, sondern eine verbesserte Zugänglichkeit zu der Verbindungsanordnung zu ermöglichen. Dies ist besonders dann vorteilhaft, wenn das Stegelement mittig der Breite der Gurtelemente verläuft.

Gemäß einer Ausführungsform hierzu ist vorgesehen, dass die erste Verbindungsgarnitur das erste Gurtelement des ersten Holmelementes mit dem ersten Gurtelement des zweiten Holmelementes und die zweite Verbindungsgarnitur das zweite Gurtelement des ersten Holmelementes mit dem zweiten Gurtelement des zweiten Holmelementes verbindet.

Da die Gurtelemente in der Regel gegenüberliegend angeordnet sind und sich dazwischen das Stegelement erstreckt, liegen die erste Verbindungsgarnitur und die zweite Verbindungsgarnitur ebenfalls gegenüber, dass zwischen Ihnen das erste und ggf. auch das zweite Schubverbindungselement angeordnet werden kann.

Dabei ist es denkbar, dass ein solches Paar von erster und zweiter Verbindungsgarnitur sowohl auf der linken Seite der Gurtelemente als auf der rechten Seite der Gurtelemente vorgesehen ist, wobei zwischen diesen Paaren von Verbindungsgarnituren dann das Stegelement verläuft. Vorzugsweise ist das Stegelement im Bereich der Verbindungsanordnung ausgespart, um eine Zugänglichkeit zu den Elementen der Verbindungsanordnung zu gewährleisten.

Gemäß einer Ausführungsform ist vorgesehen, dass die Verbindungslaschen an ihren beiden Enden einen Kopfabschnitt mit den Laschenöffnungen aufweisen, die über einen Verbindungsabschnitt miteinander verbunden sind, wobei die Breite des Verbindungsabschnitts in der Mitte verjüngt ist.

Dies ermöglicht eine weitere Gewichts- und Kosteneinsparung insbesondere dann, wenn eine Vielzahl dieser Verbindungslaschen in der Verbindungsanordnung verwendet wird. So ist es bspw. denkbar, dass für eine Verbindung von zwei Holmelementen insgesamt vier Verbindungsgarnituren verwendet werden, wobei jede Verbindungsgarnitur zwei Verbindungslaschen umfasst. Dabei können zwei Verbindungsgarnituren für die ersten Gurtelemente vorgesehen sein, während die beiden anderen Verbindungsgarnituren für die zweiten Gurtelemente vorgesehen sind.

Gemäß einer Ausführungsform ist vorgesehen, dass in zumindest einer Holmöffnung der Holmelemente eine Buchse mit einer konischen Innenwandung eingebracht ist, die mit einem Querbolzen mit einer konischen Außenwandung im eingesetzten Zustand derart zusammenwirkt, dass eine radiale Spannkraft auf die Innenwandung der Holmöffnung aufgebracht wird.

Durch die Verwendung einer solchen Spannbuchse wird der Querbolzen ohne Spiel in der Holmöffnung positioniert, sodass eine bestmögliche Kraftübertragung realisiert werden kann. Dabei kann vorgesehen sein, dass die Spannbuchse einen Flansch aufweist, um im Randbereich der Holmöffnungen an der Außenseite anzuliegen.

Gemäß einer Ausführungsform ist vorgesehen, dass der Querbolzen im Bereich der Laschenöffnung eine konische Außenwandung aufweist, sodass zwischen einer Innenwandung der Laschenöffnung und der konischen Außenwandung des Querbolzens ein Hohlraum entsteht, in den eine konische Spreizhülse eingesetzt ist, die mittels eines an einer Stirnseite des Querbolzens angeordneten Druckdeckel in den Hohlraum eingepresst ist.

Hierdurch wird es möglich, dass die Anbindung des Querbolzens an die jeweilige Verbindungslasche formschlüssig und ohne Spiel erfolgt, sodass auch hierüber eine bestmögliche Kraftübertragung realisiert wird.

Gemäß einer Ausführungsform ist vorgesehen, dass das Rotorblatt aus einem Faserverbundwerkstoff oder aus einem Faser-Metall-Laminat, welches sich abwechselnde Faserlagen eines Faserverbundwerkstoffes und Metalllagen eines Metallwerkstoffes aufweist, gebildet ist.

Gemäß einer Ausführungsform ist vorgesehen, dass die Laschenöffnung der Verbindungslasche und/oder die betreffende Holmöffnung, in die das axiale Vorspannelement eingesetzt ist, als Aussparung ausgeführt ist, wobei die Aussparung in Rotorblattlängsrichtung größer ist als quer dazu. Eine solche Aussparung kann bspw. ein Langloch sein. Dabei kann auch vorgesehen sein, dass eine einzige Aussparung, bspw. ein Langloch, sowohl die erste Laschenöffnung als auch die zweite Laschenöffnung bildet. Dies ermöglicht eine größtmögliche Flexibilität und kann insbesondere Fertigungstoleranzen ausgleichen und entspricht außerdem einer gewichtsoptimalen Konfiguration.

Die Aufgabe wird im Übrigen auch mit der Windkraftanlage gemäß Anspruch 11 erfindungsgemäß gelöst, wobei die Windkraftanlage einem Mehrblattrotor aufweist, der mindestens ein Rotorblatt nach einem der vorhergehenden Ansprüche aufweist.

Die Aufgabe wird auch durch die Verwendung bei einem gattungsgemäßen segmentierten Rotorblatt wie vorstehend beschrieben von zumindest einem Querbolzen einer Verbindungsgarnitur als axiales Vorspannelement, welches im eingesetzten Zustand eine rotorblattbezogene axiale Vorspannung auf die wenigstens eine Verbindungslasche der Verbindungsgarnitur derart ausübt, dass Stirnseiten von Holmelementen von Blattsegmenten eines segmentierten Rotorblattes aneinander gepresst werden, gelöst.

Die Erfindung wird anhand der beigefügten Figuren beispielhaft näher erläutert. Es zeigen:
- Figur 1: Draufsicht auf die erfindungsgemäße Verbindungsanordnung;
- Figur 2: Seitenansicht auf die Verbindungsanordnung in einer ersten Ausführungsform;
- Figur 3: Seitenansicht auf die Verbindungsanordnung in einer zweiten Ausführungsform.

Gleiche Bezugszeichen in den Figuren bezeichnen auch jeweils dieselben Elemente in den jeweils anderen Figuren.

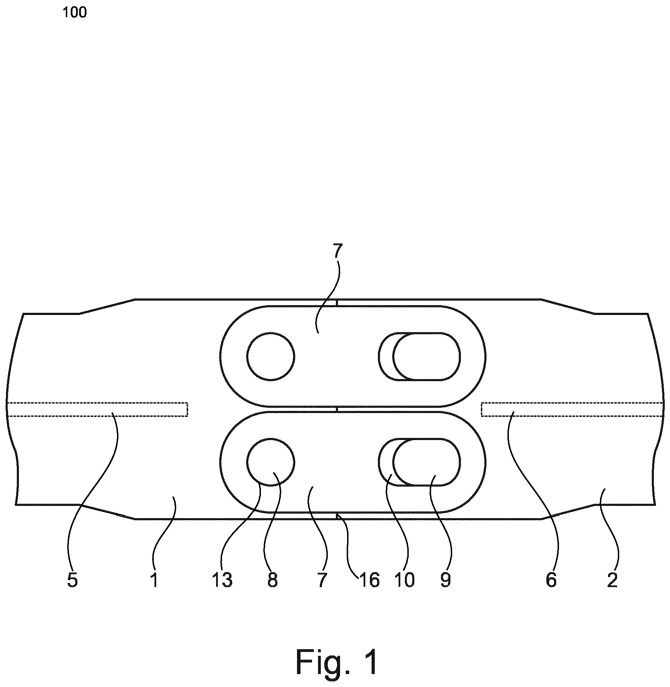

Figur 1 zeigt die erfindungsgemäße Verbindungsanordnung 100 in einer Draufsicht auf die Verbindungslaschen 7, die jeweils Teil einer Verbindungsgarnitur sind und mit denen ein erstes Gurtelement 1 eines ersten Holmelementes mit einem zweiten Gurtelement 2 eines zweiten Holmelementes verbunden werden soll. Das erste Gurtelement 1 des ersten Holmelementes ist dabei das wurzelseitige Blattsegment, während das zweite Gurtelement 2 des zweiten Holmelementes das tipseitige Blattsegment darstellt. Die erfindungsgemäße Verbindungsanordnung 100 verbindet demnach die Holmelemente des segmentierten Rotorblattes. Pro Gurtelement sind hierbei zwei Verbindungslaschen 7 vorgesehen, eine obere und eine untere.

Die Stegelemente 5, 6 der Blattsegmente sind an der Verbindungsstelle unterbrochen, um eine Zugänglichkeit zur Verbindungstechnik zu ermöglichen, so dass hier kein Schub übertragen werden kann. Zur Übertragung des Schubes über die Verbindungsstelle werden Schubverbindungselemente (nicht gezeigt), bspw. in Form einer Schubstange eingesetzt. Diese werden mit den Querbolzen 8, 9 verbunden. Die Anbindung der Schubverbindungselemente an die Querbolzen 8, 9 ist besonders günstig, da diese Verbindungselemente aufgrund ihrer massiven Bauweise eine hohe Anbindungsfestigkeit ermöglichen, und so keine weiteren Anbindungsstellen an den Blattsegmenten ausgebildet werden müssen. So können Masse und Komplexität reduziert werden.

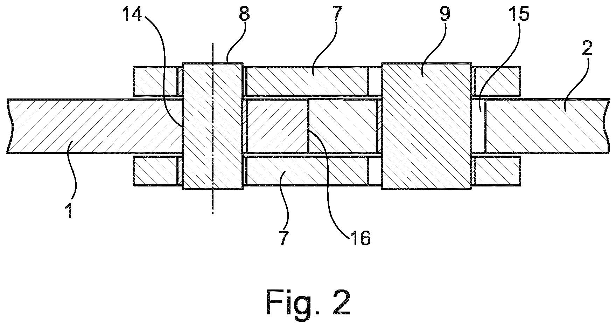

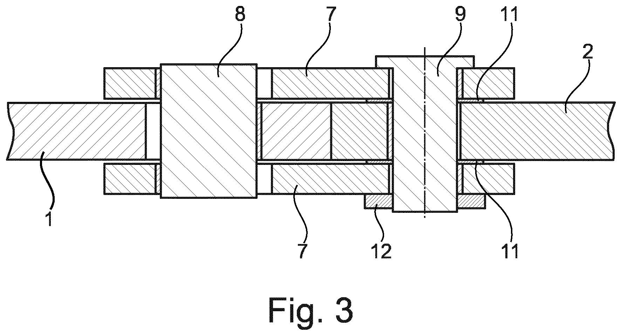

In den Verbindungslaschen 7 sind jeweils eine erste Laschenöffnung 13 und eine zweite Laschenöffnung 10 vorgesehen, die mit einer entsprechenden Holmöffnung 14, 15 (siehe Figur 2 und 3) korrespondieren. Die erste Laschenöffnung 13 korrespondiert dabei mit der ersten Holmöffnung 14 im ersten Holmelement (bzw. Gurtelement 1), während die zweite Laschenöffnung 10 mit einer zweiten Holmöffnung 15 im zweiten Holmelement (bzw. Gurtelement 2) korrespondiert.

Die zweite Laschenöffnung 10 sowie die zweite Holmöffnung 15 sind dabei als längliche Aussparung (Langloch) ausgebildet und weisen in Blattlängsrichtung eine größere Ausdehnung auf als quer dazu.

In die erste Laschenöffnung 13 sowie die erste Holmöffnung 14 ist dabei ein erster Querbolzen 8 eingeführt, während in die zweite Laschenöffnung 10 und sowie die zweite Holmöffnung 15 ein zweiter Querbolzen 9 eingeführt ist. Der zweite Querbolzen 9 ist dabei als ein axiales Vorspannelement ausgebildet und kann dabei beispielsweise seine Ausdehnung in Blattlängsrichtung verändern, derart, dass das zweite Gurtelement 2 des zweiten Holmelementes, in dem sich die zweite Laschenöffnung 10 mit der länglichen Aussparung befindet, in Richtung des ersten Gurtelementes 1 des ersten Holmelementes gedrückt wird. Dabei werden die Stirnseiten 16 der beiden Gurtelemente 1 und 2 aneinandergepresst, sodass über diese verpresste und axial vorgespannte Fügestelle der beiden Stirnseiten 16 entsprechende Kräfte übertragen und abgetragen werden können.

Im Gegensatz zum Stand der Technik (bspw. Insertverbindung) ist bei dieser Verbindungstechnik eine deutlich geringere oder gar keine Querschnittsvergrößerung der Gurte notwendig.

Der zweite Querbolzen 9 in Form eines axialen Vorspannelementes kann dabei beispielsweise so ausgebildet sein, dass er in Art einer Spreizhülse arbeitet. Hierbei erfolgt eine Vergrößerung des Querschnitts in Blattlängsrichtung im Bereich der Verbindungslaschen 7 in Richtung entgegen der ersten Laschenöffnung 13, während im Bereich der zweiten Holmöffnung 10 eine Verbreiterung des Querschnitts in Blattlängsrichtung in Richtung der Stirnseiten 16 erfolgt. Hierdurch wird das zweite Gurtelement 2 des zweiten Holmelementes in Richtung des ersten Gurtelementes 1 gedrückt, sodass die beiden Stirnseiten 16 der beiden Gurtelemente 1, 2 miteinander verpresst werden.

Figur 3 zeigt einer Ausführungsform, bei der die längliche Aussparung in Form eines Langloches in der ersten Laschenöffnung 13 als auch in der ersten Holmöffnung 14 vorgesehen ist und das Verpressen der Stirnseiten 16 somit genau spiegelverkehrt zu den Ausführungsformen der Figuren 1 und 2 erfolgt.

Der zweite Querbolzen 9 ist dabei als Flanschbolzen ausgeführt und kann so in Kombination mit den beidseitig der zweiten Holmöffnung 15 vorgesehenen Unterlegscheiben 11 und der gegenüber dem Flansch angeschraubt Mutter 12 eine Vorspannung in axialer Richtung des zweiten Querbolzens 9 aufbringen. Dadurch wird das Laminat des zweiten Gurtelementes 2 des zweiten Holmelementes in Dickenrichtung gestützt, was die Lochlaibungsfestigkeit erhöht. Dadurch kann das zweite Gurtelement 2 in dieser Variante dünner ausgeführt werden, ohne an Tragfähigkeit einzubüßen.

### Bezugszeichenliste

- 1: erstes Gurtelement des ersten Holmelementes
- 2: zweites Gurtelement des zweiten Holmelementes
- 5: erstes Stegelement
- 6: zweiten Stegelement
- 7: Verbindungslaschen
- 8: erster Querbolzen
- 9: zweiter Querbolzen/axiales Vorspannelement
- 10: zweite Laschenöffnung
- 11: Unterlegscheibe
- 12: Mutter
- 13: erste Laschenöffnung
- 14: erste Holmöffnung
- 15: zweite Holmöffnung
- 16: Stirnseiten

## Patentansprüche

1. Segmentiertes Rotorblatt für Windkraftanlagen mit mindestens zwei Blattsegmenten, die sich in entgegengesetzter Richtung von einer Fügestelle aus in eine Längsrichtung erstrecken, wobei jedes Blattsegment mindestens ein innenliegendes Holmelement aufweist, welches ein Strukturelement des Rotorblattes bildet,
a) wobei das erste Holmelement des ersten Blattsegmentes und das zweite Holmelement des zweiten Blattsegmentes an der Fügestelle mit ihren Stirnseiten (16) mittels einer Verbindungsanordnung aneinandergefügt sind,
b) wobei die Verbindungsanordnung eine Mehrzahl von Verbindungsgarnituren aufweist, die jeweils die Holmelemente miteinander verbinden,
c) wobei jede Verbindungsgarnitur einen ersten Querbolzen (8), einen zweiten Querbolzen (9) und wenigstens eine Verbindungslasche (7) umfasst, die an ihren Enden eine erste Laschenöffnung (13) und eine zweite Laschenöffnung (10) aufweist, und
d) wobei bei jeder Verbindungsgarnitur der erste Querbolzen (8) quer zur Längsrichtung des Rotorblattes durch eine Holmöffnung (14, 15) im ersten Holmelement sowie die erste Laschenöffnung (13) der Verbindungslasche (7) und der zweite Querbolzen (9) quer zur Längsrichtung des Rotorblattes durch eine Holmöffnung (14, 15) im zweiten Holmelement sowie die zweite Laschenöffnung (10) der Verbindungslasche (7) geführt ist, sodass die Verbindungslasche (7) die Holmelemente miteinander verbindet,
**dadurch gekennzeichnet, dass**
e) zumindest einer der Querbolzen (8, 9) einer Verbindungsgarnitur als axiales Vorspannelement (9) ausgebildet ist, welches im eingesetzten Zustand eine rotorblattbezogene axiale Vorspannung auf die wenigstens eine Verbindungslasche (7) der Verbindungsgarnitur derart ausübt, dass die Stirnseiten (16) der Holmelemente aneinander gepresst werden.

2. Rotorblatt nach Anspruch 1, **dadurch gekennzeichnet, dass** zumindest der erste Querbolzen (8) einer ersten Verbindungsgarnitur und der zweiten Querbolzen (9) einer der ersten Verbindungsgarnitur gegenüberliegenden zweiten Verbindungsgarnitur über zumindest ein erstes Schubverbindungselement miteinander verbunden sind.

3. Rotorblatt nach Anspruch 2, **dadurch gekennzeichnet, dass** der zweite Querbolzen (9) der ersten Verbindungsgarnitur und der erste Querbolzen (8) der zweiten Verbindungsgarnitur über ein zweites Schubverbindungselement miteinander verbunden sind.

4. Rotorblatt nach einem der vorhergehenden Ansprüche, **dadurch gekennzeichnet, dass** das erste Holmelement (1) und das zweite Holmelement (2) jeweils ein erstes Gurtelement (1) und ein gegenüberliegendes zweites Gurtelement (2) haben, die beide durch wenigstens ein dazwischenliegendes Stegelement (5, 6) miteinander verbunden sind, wobei die Querbolzen (8, 9) in Holmöffnungen (14, 15) der Gurtelemente (1, 2) quer zur Längsrichtung des Rotorblattes eingebracht sind.

5. Rotorblatt nach Anspruch 4, **dadurch gekennzeichnet, dass** die erste Verbindungsgarnitur das erste Gurtelement des ersten Holmelementes (1) mit dem ersten Gurtelement (1) des zweiten Holmelementes (2) und die zweite Verbindungsgarnitur das zweite Gurtelement (2) des ersten Holmelementes (1) mit dem zweiten Gurtelement des zweiten Holmelementes (2) verbindet.

6. Rotorblatt nach einem der vorhergehenden Ansprüche, **dadurch gekennzeichnet, dass** die Verbindungslaschen (7) an ihren beiden Enden einen Kopfabschnitt mit den Laschenöffnungen (10, 13) aufweisen, die über einen Verbindungsabschnitt miteinander verbunden sind, wobei die Breite des Verbindungsabschnitts in der Mitte verjüngt ist.

7. Rotorblatt nach einem der vorhergehenden Ansprüche, **dadurch gekennzeichnet, dass** in zumindest einer Holmöffnung (14, 15) der Holmelemente eine Buchse mit einer konischen Innenwandung eingebracht ist, die mit einem Querbolzen (8, 9) mit einer konischen Außenwandung im eingesetzten Zustand derart zusammenwirkt, dass eine radiale Spannkraft auf die Innenwandung der Holmöffnung (14, 15) aufgebracht wird.

8. Rotorblatt nach einem der vorhergehenden Ansprüche, **dadurch gekennzeichnet, dass** der Querbolzen (8, 9) im Bereich der Laschenöffnung (10, 13) eine konische Außenwandung aufweist, sodass zwischen einer Innenwandung der Laschenöffnung (10, 13) und der konischen Außenwandung des Querbolzens (8, 9) ein Hohlraum entsteht, in den eine konische Spreizhülse eingesetzt ist, die mittels eines an einer Stirnseite (16) des Querbolzens (8, 9) angeordneten Druckdeckel in den Hohlraum eingepresst ist.

9. Rotorblatt nach einem der vorhergehenden Ansprüche, **dadurch gekennzeichnet, dass** das Rotorblatt aus einem Faserverbundwerkstoff oder aus einem Faser-Metall-Laminat, welches sich abwechselnde Faserlagen eines Faserverbundwerkstoffes und Metalllagen eines Metallwerkstoffes aufweist, gebildet ist.

10. Rotorblatt nach einem der vorhergehenden Ansprüche, **dadurch gekennzeichnet, dass** die Laschenöffnung (10, 13) der Verbindungslasche (7) und/oder die betreffende Holmöffnung (14, 15), in die das axiale Vorspannelement (9) eingesetzt ist, als Aussparung ausgeführt ist, wobei die Aussparung in Rotorblattlängsrichtung größer ist als quer dazu.

11. Windkraftanlage mit einem Mehrblattrotor, der mindestens ein Rotorblatt nach einem der vorhergehenden Ansprüche aufweist.
